# EUROPÄISCHE PATENTSCHRIFT

(11) **EP 3 525 476 B1**
(45) Veröffentlichungstag und Bekanntmachung des Hinweises auf die Patenterteilung: **01.09.2021**
(21) Anmeldenummer: 19156293.3
(22) Anmeldetag: 08.02.2019
(51) Int. Cl.: H04Q 1/24, H04W 40/24, H04L 12/24, H04L 12/751, H04W 40/22

(54) **VERFAHREN ZUR TOPOLOGIEBESTIMMUNG IN EINER MOBILFUNK-SITE UND EINE ENTSPRECHENDE MOBILFUNK-SITE**
METHOD TO DETERMINE THE TOPOLOGY OF A MOBILE COMMUNICATION SITE AND CORRESPONDING MOBILE COMMUNICATION SITE
PROCEDE DE DETERMINATION DE TOPOLOGIE D'UN SITE DE COMMUNICATION MOBILE ET UN SITE DE COMMUNICATION MOBILE CORRESPONDANT

(30) Priorität: 12.02.2018 DE 102018103097
(43) Veröffentlichungstag der Anmeldung: 14.08.2019
(73) Patentinhaber: TELEFONAKTIEBOLAGET LM ERICSSON (PUBL), 164 83 Stockholm (SE)
(72) Erfinder: MOHR, Markus, 83022 Rosenheim (DE); SCHMID, Johann, 83083 Riedering (DE)
(74) Vertreter: Flach Bauer Stahl Patentanwälte Partnerschaft mbB

(56) Entgegenhaltungen:
- EP-A1- 2 033 379
- US-A1- 2007 291 665
- US-A1- 2017 317 813

## Beschreibung

Die Erfindung betrifft Verfahren zur Topologiebestimmung in einer Mobilfunk-Site und entsprechende Mobilfunk-Site.

Derzeit eingesetzte Mobilfunk-Sites umfassen eine Antennenanordnung, die von einer Basisstation mit Energie und Mobilfunksignalen versorgt wird. Die Antennenanordnung ist dabei in den meisten Fällen auf einem Antennenmast angebracht, um ein bestimmtes Gebiet mit Mobilfunkdienstleistungen versorgen zu können. Die Basisstation ist häufig am Boden angeordnet und über ein entsprechendes Speisekabel mit der Antennenanordnung verbunden. Eine solche Antennenanordnung umfasst noch zusätzliche Komponenten, die vom Betreiber der Mobilfunk-Site gesteuert werden können. Beispielsweise kann der Down-Tilt-Winkel der Antennenanordnung im Betrieb an die jeweiligen Bedürfnisse angepasst werden, um die Zellgröße optimal einstellen zu können. Es ist auch möglich, dass der Betreiber einen Verstärker, insbesondere in Form eines Tower-Mounted-Amplifiers(z.B. SingleBand Dual Tower Mounted Amplifier - SB-DTMA; DualBand Dual Tower Mounted Amplifier - DB-DTMA) entsprechend ansteuert, z.B. ein- bzw. ausschaltet. Die hierfür notwendigen Steuersignale können an die Basisstation übertragen und von dieser an die zu steuernden Geräte auf dem Antennenmast weitergeleitet werden. Um die Anzahl der Speisekabel gering zu halten werden verschiedene Mobilfunkbänder oder Signalpfade (z.B. MIMO-Pfade) über dasselbe Speisekabel übertragen, wobei jeweils ein Speisekabel für jede der beiden Polarisationen (MAIN-Signal; DIV-Signal) oder N x M MIMO (z.B. bei LTE (-A)) verwendet werden. Um die jeweiligen Mobilfunkbänder aufzutrennen und wieder zusammenzufassen sind entsprechende Filter notwendig, die auch als Combiner bezeichnet werden. Derartige Filter haben üblicherweise mehrere Signalanschlüsse für die verschiedenen Mobilfunkbänder und einen gemeinsamen Anschluss für das Speisekabel. Bandpassstrukturen innerhalb des Combiners stellen sicher, dass die Mobilfunkbänder, die an dem gemeinsamen Anschluss anliegen, nur an einem Signalanschluss ausgegeben werden.

Aufgrund der vielen unterschiedlichen Komponenten und der unterschiedlichen Anzahl an Mobilfunkbändern, über die Mobilfunksignale unterschiedlicher Mobilfunkstandards übertragen werden können, sind eine Vielzahl von Komponenten notwendig, die in einer richtigen Reihenfolge miteinander verschaltet werden müssen. Die einzelnen Mobilfunk-Sites können sich außerdem deutlich voneinander unterscheiden. Folglich kann es beim Zusammenschalten der einzelnen Komponenten zu Fehlern kommen. In diesem Fall weicht die aufgebaute Mobilfunk-Site bezüglich ihrer Verbindungen zwischen den einzelnen elektrischen Funktionseinheiten von der geplanten Mobilfunk-Site ab.

Es ist daher wünschenswert, die ordnungsgemäße Zusammenschaltung der einzelnen elektrischen Funktionseinheiten sowohl lokal als auch aus der Ferne möglichst einfach überprüfen zu können.

Die US 2007/291665 A1 beschreibt ein Verfahren zur automatischen Erkennung einer Topologie eines lokalen Netzwerks (LAN). Das LAN kann in einem Telekommunikationsknoten, wie z.B. einer Basisstation, enthalten sein. Das LAN umfasst einen zentralen Host und weitere an das LAN angeschlossene Hosts. Der zentrale Host sendet Topologiedeskriptoren an die mit dem LAN verbundenen Hosts, wobei die Hosts jeweils mindestens einen der empfangenen Topologiedeskriptoren und andere Informationen an den zentralen Host melden. Der zentrale Host kann so eine Topologiedatenbank aufbauen, die die Netzwerktopologie beschreibt.

Die EP 2 033 379 A1 beschreibt ein Verfahren zur Bestimmung einer Topologie eines dynamischen Netzwerks. Das dynamische Netzwerk wird zyklisch überwacht, um während jedes Zyklus neue Knoten zu bestimmen, die seit einem vorhergehenden Zyklus mit dem dynamischen Netzwerk verbunden sind, und verschwundene Knoten, die seit dem vorhergehenden Zyklus vom dynamischen Netzwerk getrennt wurden. Die jeweilige Konnektivität jedes neuen Knotens wird durch die Identifizierung eines Ports in einem Switch bestimmt, mit dem der jeweilige neue Knoten verbunden ist. Die Netzwerkdaten werden so erweitert, dass sie Knotendaten, die für die neuen Knoten repräsentativ sind, sowie die jeweiligen Adressdaten und Konnektivitätsdaten jedes neuen Knotens enthalten, während die Knotendaten, die für jeden verschwundenen Knoten repräsentativ sind, aus den Netzwerkdaten sowie die jeweiligen Adressdaten und Konnektivitätsdaten davon entfernt werden. Am Ende jedes Zyklus sind die jeweiligen Konnektivitätsdaten aller Knoten in der Menge ein Indikator für die jeweilige Netzwerktopologie.

Aus dem Stand der Technik sind für weit entfernte technische Gebiete Lösungen bekannt, um allgemein herauszufinden, ob eine Komponente mit genau einer anderen Komponente verbunden ist. Eine solche Lösung ist aus der US 2005/0196124 A1 bekannt. Der dortige Gegenstand beschreibt die Möglichkeit, um zusätzliche Hardware-Komponenten zu bereits existierenden Leiterplatten und/oder Gehäusen hinzuzufügen, um beispielsweise den Speicher in Massenspeichern zu erhöhen. So wird beschrieben, dass die Verbindung zwischen zwei Systemen dahingehend überprüft wird, indem ein erstes System ein Signal aussendet und ein zweites System einen Anschlussport ermittelt, an dem dieses Signal empfangen wurde und das erste System hierüber informiert. Nachteilig an der US 2005/0196124 A1 ist, dass sich diese Lösung nicht zur Übertragung auf eine Mobilfunk-Site eignet, weil hier die Verschaltung zwischen den einzelnen Systemen beliebig sein kann und ein einzelnes System mit mehreren anderen Systemen verbunden sein kann.

Es ist daher die Aufgabe der hier vorliegenden Erfindung, ein Verfahren zur Topologiebestimmung in einer Mobilfunk-Site zu schaffen, durch welches die Verschaltung der einzelnen elektrischen Funktionseinheiten innerhalb der Mobilfunk-Site ermittelt werden kann.

Die Aufgabe wird durch das erfindungsgemäße Verfahren zur Topologiebestimmung in der Mobilfunk-Site gemäß dem Anspruch 1 gelöst. In den Ansprüchen 2-14 sind erfindungsgemäße Weiterbildungen des Verfahrens angegeben. Der Anspruch 15 beschreibt dagegen eine Mobilfunk-Site, die dazu ausgebildet ist, das Verfahren zur Topologiebestimmung auszuführen.

Das erfindungsgemäße Verfahren zur Topologiebestimmung in einer Mobilfunk-Site sieht vor, dass die Mobilfunk-Site n Knoten mit n ≥ 3, n ≥ 4, n ≥ 5, n ≥ 6, n ≥ 7, n ≥ 8 oder n ≥ 9 umfasst, wobei jeder Knoten eine elektrische Funktionseinheit darstellt. Weiterhin weist jeder Knoten m Ports, mit m ≥ 1 auf. Jeder der n Knoten ist über zumindest einen seiner m Ports mit zumindest einem weiteren der n Knoten über zumindest einen von dessen m Ports elektrisch und/oder elektromagnetisch zur Kommunikation verbunden. Diese Verbindung ist insbesondere kabelgebunden, wobei bevorzugt dasjenige Kabel zur Verbindung der jeweiligen Knoten untereinander verwendet wird, über welches auch im Regelbetrieb der Mobilfunk-Site die Mobilfunkbänder, also die HF-Signale übertragen werden. Eine elektromagnetische Verbindung kann auch eine Verbindung über Lichtwellenleiter umfassen.

Das Verfahren ist insbesondere dann ausführbar, wenn sich die Mobilfunk-Site nicht im Regelbetrieb befindet. Grundsätzlich umfasst das erfindungsgemäße Verfahren die nachfolgenden Verfahrensschritte. In einem ersten Verfahrensschritt wird die Anzahl der vorhandenen Knoten ermittelt, um in einem nachfolgenden Verfahrensschritt einen dieser Knoten als Master-Knoten und die anderen (n-1) Knoten als Slave-Knoten festzulegen. Im Anschluss daran wird einer dieser Slave-Knoten als Prüf-Slave-Knoten ausgewählt und die anderen (n-2) Slave-Knoten werden derart angesteuert, dass diese ihre Kommunikation (temporär) auf ihren Ports unterbinden. Dies bedeutet vorzugsweise, dass sie zwar Kommunikationssignale auf ihren Ports empfangen können, auf diese allerdings nicht mehr reagieren und diese auch nicht mehr weiterleiten. In einem weiteren Verfahrensschritt wird geprüft, über welche der m Ports des Master-Knotens und über welche der m Ports des Prüf-Slave-Knotens eine Kommunikation zwischen dem Master-Knoten und dem Prüf-Slave-Knoten möglich ist. Die Ports, über die eine Kommunikation zwischen dem Master-Knoten und dem Prüf-Slave-Knoten erfolgen kann, werden dann (z.B. in einer Speichereinheit) gespeichert. Unter einer "Kommunikation" ist im einfachsten Fall lediglich eine elektrische oder elektromagnetische Verbindung zu verstehen. Im Folgenden findet eine Wiederholung der genannten Schritte für die anderen Slave-Knoten statt, von denen jeweils einer nacheinander (nur einer zur selben Zeit) als Prüf-Slave-Knoten ausgewählt wird. Zur Auswahl eines anderen Slave-Knotens als neuer Prüf-Slave-Knoten kann optional (kurzzeitig) die Kommunikation der einzelnen Knoten wieder zugelassen werden. In diesem Fall wird vorzugsweise, sobald ein neuer Prüf-Slave-Knoten ausgewählt wurde, die Kommunikation der anderen Slave-Knoten und der früheren Master-Knoten wieder unterbunden. Zum Schluss kann eine Anschlusstopologie für den einen Master-Knoten erstellt werden, aus welcher ersichtlich ist, mit welchen anderen (Slave-)Knoten er direkt (also ohne eine Dazwischenschaltung eines weiteren Knotens) kommunizieren kann.

Es ist besonders vorteilhaft, dass mit dem erfindungsgemäßen Verfahren eine Topologie in einer Mobilfunk-Site bestimmt werden kann und sich dieses Verfahren insbesondere auch dann eignet, wenn die einzelnen elektrischen Funktionseinheiten (Knoten) über mehrere Ports verfügen und an vielerlei andere Knoten angeschlossen werden können, wodurch sich eine komplexe Topologie ergibt. Das erfindungsgemäße Verfahren kann außerdem mit der ohnehin bereits bestehenden Verkabelung der Mobilfunk-Site verwendet werden. Zum Datenaustausch der einzelnen Ergebnisse sind keine separaten Kabelverbindungen notwendig.

In einer erfindungsgemäßen Weiterbildung werden die bereits beschriebenen Verfahrensschritte, die zur Erzeugung einer Anschlusstopologie für den Master-Knoten geführt haben, wiederholt, wobei einer der bisherigen Slave-Knoten (zu denen natürlich auch der Prüf-Slave-Knoten gehört) als neuer Master-Knoten festgelegt wird. Infolgedessen wird für diesen neuen Master-Knoten ebenfalls eine Anschlusstopologie erstellt. Dies wird solange fortgesetzt, bis zumindest n-1 Knoten einmal als Master-Knoten festgelegt wurden. Für den letzten Slave-Knoten, der nicht als Master-Knoten festgelegt wurde, kann seine Anschlusstopologie aus den bereits erzeugten Anschlusstopologien der n-1 Master-Knoten ermittelt werden. Bei den entsprechenden Wiederholungen müssen die vorherigen Master-Knoten nicht berücksichtigt (ein einmal als Master-Knoten festgelegter Knoten braucht nicht wieder als Slave-Knoten oder Prüf-Slave-Knoten festgelegt zu werden). Eine Verbindung von einem neuen Master-Knoten zu einem vorherigen Master-Knoten ist ja bereits bekannt.

Es ist auch möglich, dass zumindest einer der n Knoten neben seinen m Ports noch über zumindest eine zusätzliche drahtgebundene oder drahtlose Schnittstelle verfügt und dazu ausgebildet ist, über diese zumindest eine zusätzliche Schnittstelle mit weiteren Netzwerken oder Geräten zu kommunizieren. Beim Zusammenstellen der Anschlusstopologie wird eine solche zusätzliche Schnittstelle hinzugefügt. Bei dieser zusätzlichen Schnittstelle kann es sich beispielsweise um eine LAN-Schnittstelle (IEEE 802.3*), oder um eine WLAN-Schnittstelle (IEEE 802.11*) oder um eine Bluetooth®-Schnittstelle (IEEE 802.15.*), zu der auch Bluetooth-Low-Energy zählt, oder um eine Zig-Bee®-Schnittstelle (IEEE 802.15.4), oder um eine Z-Wave®-Schnittstelle, oder um eine IPv6 basierende THREAD® Schnittstelle handeln.

In einem weiteren Ausführungsbeispiel des erfindungsgemäßen Verfahrens wird eine (Gesamt-)Topologie der Mobilfunk-Site anhand der bereits ermittelten Anschlusstopologien der einzelnen Knoten erstellt. Diese (Gesamt-)Topologie der Mobilfunk-Site gibt an, mit welchem weiteren Knoten oder welchen weiteren Knoten jeder Knoten (vorzugsweise zum Datenaustausch) verbunden ist. Diese (Gesamt-)Topologie kann von einem Knoten oder von einer Steuervorrichtung ermittelt werden, an den oder an die die einzelnen Anschlusstopologien übertragen werden. Vorzugsweise enthält die (Gesamt-)Topologie auch Informationen darüber, über welche Art von Schnittstelle und optional unter Nutzung welches Protokolls eine entsprechende Kommunikation zwischen zwei Knoten möglich ist. Grundsätzlich ist es möglich, dass die erstellte Topologie mit einer Referenztopologie verglichen wird, wobei Abweichungen auf eine fehlerhafte Verschaltung hinweisen und beispielsweise über eine Kommunikationseinrichtung an eine übergeordnete Leit- oder Steuereinrichtung übertragen werden können. Derartige Abweichungen können auch vor Ort an beispielsweise ein Computersystem eines Monteurs (z.B. Smartphone, Laptop) ausgegeben werden.

In einer erfindungsgemäßen Weiterbildung des Verfahrens wird der Master-Knoten anhand seines Rangs festgelegt. Grundsätzlich ist es hier möglich, dass jedem ermittelten Knoten ein individueller Rang zugewiesen wird. Dabei wird kein Rang zweimal vergeben. Derjenige Knoten wird dann als Master-Knoten oder als jeweiliger neuer Master-Knoten festgelegt, dessen Rang, verglichen mit den Rängen der anderen Knoten, beispielsweise den niedrigsten oder den höchsten Wert aufweist. Auch eine zufällige Auswahl wäre möglich. Diese Ränge können für die Zeit, in welcher das erfindungsgemäße Verfahren durchgeführt wird, beibehalten werden oder es können auch ganz oder teilweise neue Ränge vergeben werden. Eine solche Neuvergabe findet insbesondere dann statt, wenn die Anschlusstopologie für einen Master-Knoten ermittelt worden ist. Der Rang eines Knotens kann sich beispielsweise aus seiner Seriennummer, dem Gerätetyp, der Anzahl der Ports, der MAC-Adresse, der IP-Adresse, einer beliebigen Adresse, einer Zahl, einer Zufallszahl, einem Gerätemerkmal und/oder einem Temperaturwert oder einem davon abgeleiteten Merkmal, wie beispielsweise einem HASH-Wert ergeben.

Wie bereits erläutert, wird bei einer Analyse, zwischen welchen Ports eine Kommunikation zwischen dem Master-Knoten und dem Prüf-Slave-Knoten möglich ist, die Kommunikation der anderen Slave-Knoten unterbunden. Dies kann für eine vorbestimmte Zeitdauer, die beispielsweise für jeden der anderen Slave-Knoten gleich oder unterschiedlich ist und sich gegebenenfalls aus dem Rang ergibt, erfolgen. Die Kommunikation kann auch so lange unterbunden werden, bis ein entsprechendes Triggersignal empfangen wird (z.B. Infrarottrigger, Funktrigger usw.). Das Unterbinden erfolgt vorzugsweise durch eine Unterbrechung in der Layer-1-Ebene. Eine Unterbrechung in einer höheren Layer-Ebene wäre auch denkbar.

In einer erfindungsgemäßen Weiterbildung des Verfahrens wird festgestellt, ob eine Kommunikation über (lediglich) einen der m Ports des Master-Knotens zu dem Prüf-Slave-Knoten hergestellt werden kann. Falls dies gelingt, dann wird dieser Port für den Master-Knoten gespeichert. Dieser Verfahrensschritt wird dann für alle Ports des Master-Knotens wiederholt. Für diese Prüfung wäre lediglich ein Port des Master-Knotens (zur selben Zeit) aktiv bzw. die Kommunikation würde nur über einen Port gleichzeitig erfolgen. Grundsätzlich wäre es dann möglich, dass der Prüf-Slave-Knoten bei einer erfolgten Kommunikation seine Ports iterierend aktiviert bzw. deaktiviert, so dass entweder der Master-Knoten oder der Prüf-Slave-Knoten ermitteln kann, über welche Ports des Prüf-Slave-Knotens eine Kommunikation mit dem Master-Knoten erfolgen kann. Dieses Iterieren der Anschlussports am Prüf-Slave-Knoten kann beispielsweise durch den Master-Knoten initiiert werden oder selbstständig (z.B. durch Zeitablauf) vom Prüf-Slave-Knoten ausgeführt werden. Hierbei wird insbesondere auch erfasst, welche Art von Schnittstelle und optional unter Nutzung welches Protokolls eine entsprechende Kommunikation zwischen diesen Ports beider Knoten möglich ist.

Bei den Knoten handelt es sich insbesondere um Basisstationen, Combiner, DTMAs, RET-Einheiten, Antennenanordnungen, Überwachungseinheiten und andere (zukünftigen) Geräte. Bevorzugt sind zumindest zwei verschiedene dieser aufgezählten Einheiten in einer heutigen Mobilfunk-Site eingesetzt. So wäre es möglich, dass das erfindungsgemäße Verfahren sich auf vier Combiner anwenden lässt, wobei weiterhin noch zumindest ein (DualBand) DTMA vorhanden ist. Insgesamt sind daher eine, aber bevorzugt zwei verschiedene Arten von Funktionseinheiten eingesetzt.

Die erfindungsgemäße Mobilfunk-Site weist n Knoten mit n ≥ 3 auf, wobei jeder Knoten m Ports mit m ≥ 1 umfasst. Die Mobilfunk-Site ist dann dazu ausgebildet, das Verfahren zur Topologiebestimmung auszuführen.

Verschiedene Ausführungsbeispiele der Erfindung werden nachfolgend unter Bezugnahme auf die Zeichnungen beispielhaft beschrieben. Gleiche Gegenstände weisen dieselben Bezugszeichen auf. Die entsprechenden Figuren der Zeichnungen zeigen im Einzelnen:
- Figuren 1, 2A, 2B:: eine grundlegende Funktionsweise einer Mobilfunk-Site;
- Figuren 3A, 3B, 3C, 3D:: verschiedene Ausführungsbeispiele eines Knotens mit unterschiedlich vielen Ports;
- Figur 4A:: ein Ausführungsbeispiel zur Ermittlung eines Rangs eines Knotens;
- Figuren 4B, 4C, 4D:: ein Ausführungsbeispiel, das angibt wie die Topologie aus Figur 4A ermittelt werden kann;
- Figuren 5A, 5B, 5C, 5D, 5E:: ein weiteres Ausführungsbeispiel, das angibt wie eine Topologie ermittelt werden kann; und
- Figuren 6A, 6B, 6C, 6D und 6E:: verschiedene Flussdiagramme, die Erläutern wie ein erfindungsgemäßes Verfahren zur Topologiebestimmung in einer Mobilfunk-Site arbeitet.

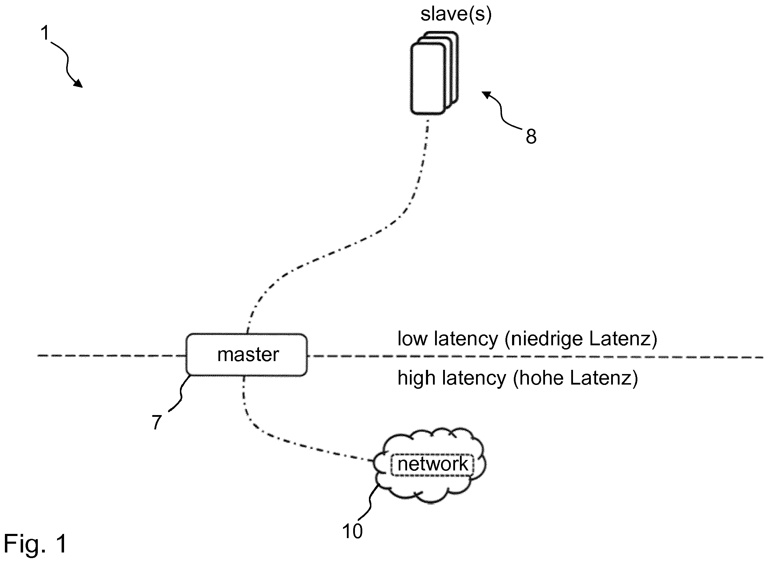

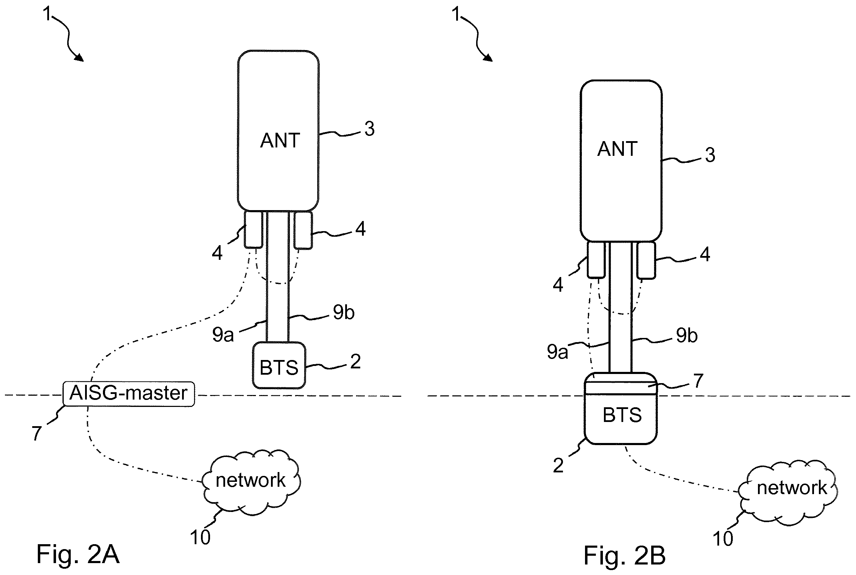

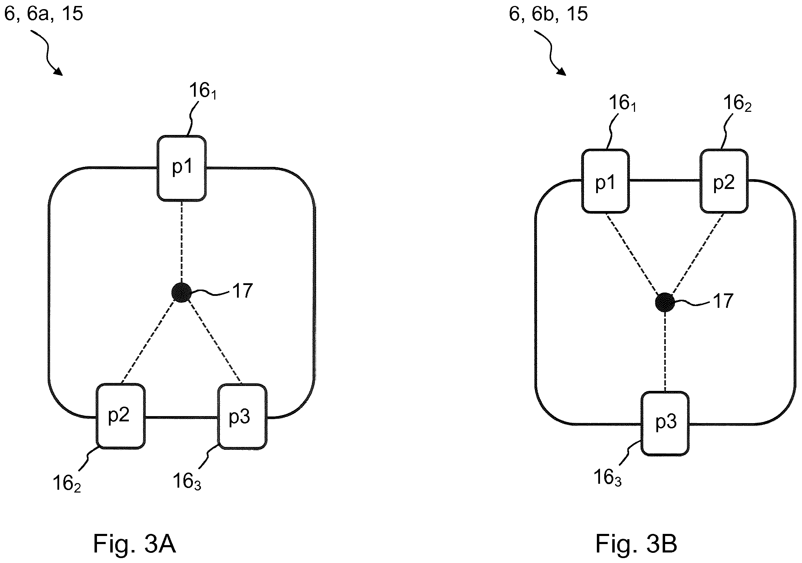

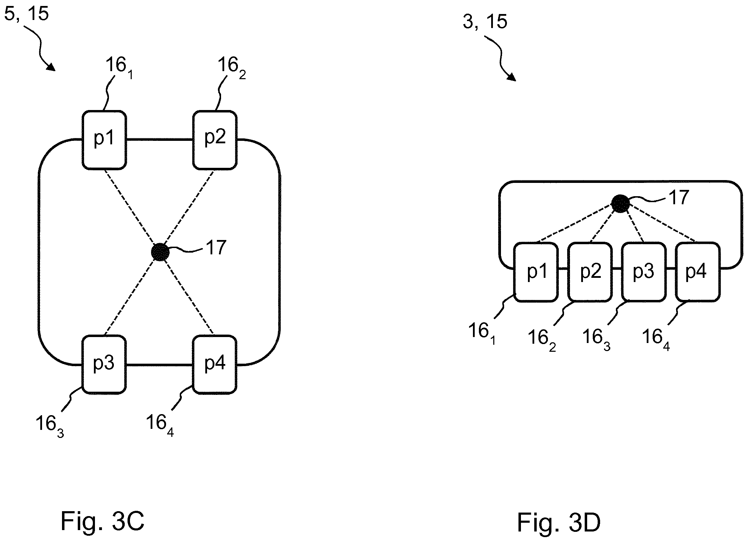

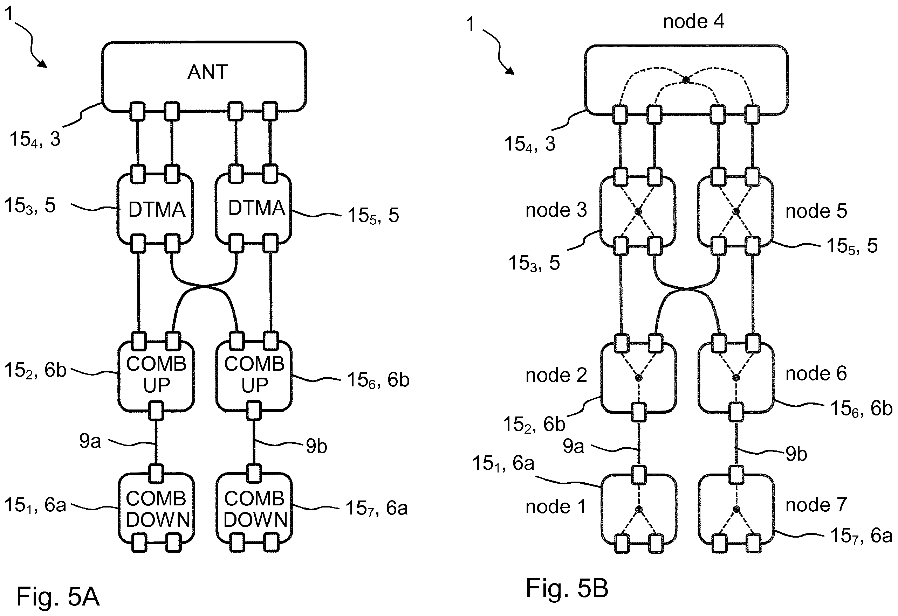

Die Figuren 1, 2A und 2B zeigen die grundlegende Funktionsweise bzw. den grundlegenden Aufbau einer Mobilfunk-Site 1. Eine Mobilfunk-Site 1 umfasst eine oder mehrere Basisstationen 2, die insbesondere Daten von einem übergeordneten Netzwerk 10 empfängt und an dieses sendet. Die Basisstation 2 bereitet diese Daten auf und ordnet diese den jeweiligen Mobilfunkbändern zu. Weiterhin ist noch eine Antennenanordnung 3 vorgesehen, die vorzugsweise mehrere Antennenelemente umfasst, die zum Aussenden und zum Empfangen von Mobilfunksignalen in unterschiedlichen Mobilfunkbändern eingesetzt werden. Die Mobilfunk-Site 1 umfasst in diesem Beispiel außerdem noch zwei RET-Einheiten 4. Über die RET-Einheit 4 kann ein Phasenschieber angesteuert werden, welcher innerhalb der Antennenanordnung 3 angeordnet ist. Dadurch kann der Down-Tilt-Winkel der Antennenanordnung 3 verändert werden, wodurch unterschiedliche räumliche Gebiete durch die Mobilfunk-Site 1 ausgeleuchtet werden. Ein DTMA 5 (siehe Figur 3C) könnte auch noch angebracht sein. Wie später im Hinblick auf die Figuren 3A, 3B, 5A und 5B noch erläutert wird, umfasst die Mobilfunk-Site 1 außerdem noch mehrere Combiner 6. Die Mobilfunk-Site 1 kann außerdem noch allgemeine Überwachungseinheiten umfassen, über die die Temperatur, der Luftdruck, die Luftfeuchte, die Windgeschwindigkeit, die Sonneneinstrahlung und/oder die Ausrichtung der Antennenanordnung 3 gemessen werden kann. Eine Überwachungseinheit kann auch eine Webcam beinhalten, um den Standort der Mobilfunk-Site 1 zu überwachen. Diese Bestandteile der Mobilfunk-Site 1 werden nachfolgend auch als elektrische Funktionseinheiten bezeichnet. Diese elektrischen Funktionseinheiten lassen sich über bestimmte Steuerbefehle (z.B. AISG-Befehle) ansteuern. Ein AISG-Master 7 erzeugt diese Steuerbefehle und überträgt diese an die AISG-Slaves 8. Bei den AISG-Slaves 8 kann es sich um diejenigen Einheiten handeln, die zuvor als elektrische Funktionseinheiten beschrieben wurden. Aufgrund der Langwierigkeit, bis neue Geräte in den AISG-Standard aufgenommen werden, können heute nicht alle gewünschten Geräte durch den AISG-Master 7 angesteuert werden. Die elektrischen Funktionseinheiten umfassen daher auch Geräte, die nicht zu den AISG-Slaves 8 zu zählen sind. Die Steuerbefehle werden dabei meistens über dasselbe Speisekabel 9a, 9b übertragen, über welches auch die Mobilfunksignale übertragen werden. Dabei werden allerdings andere Frequenzbereiche verwendet. Das AISG-Signal wird beispielsweise auf einer niedrigeren Frequenz von 2,176 MHz übertragen. Diese Frequenz liegt unterhalb der Frequenzen, die für die Mobilfunkdienstleistungen verwendet werden. Das AISG-Signal ist ein On/Off-Keying-Signal, wobei das On-Signal einen Signalpegel von +5 dBm aufweist und wobei der Off-Pegel einen Signalpegel von -40 dBm umfasst. Es sind Datenraten von zumindest 9,6 kbit/s möglich. Der AISG-Standard sieht dabei vor, dass die Kommunikation zwischen dem AISG-Master 7 und den AISG-Slaves 8 nur eine niedrige Latenz haben darf. Anders sieht es dagegen für die Kommunikation zwischen dem AISG-Master 7 und einem übergeordneten Netzwerk 10 (z.B. Leit- oder Steuereinrichtung des Mobilfunkbetreibers) aus. Eine solche Verbindung, die beispielsweise auch über das Internet erfolgen kann, hat eine höhere Latenz.

In FIG. 2A ist der AISG-Master 7 separat zur zumindest einen Basisstation 2 angeordnet (z.B. als separate Hardware). Die Basisstation 2 ist über zwei Speisekabel 9a, 9b mit der Antennenanordnung 3 verbunden. Unterschiedliche Polarisationen (MAIN-Signal und DIV-Signal) eines Mobilfunkbands werden beispielsweise über unterschiedliche Speisekabel 9a, 9b übertragen. Selbiges kann auch für die MIMO-Pfade gelten.

In FIG. 2B ist der AISG-Master 7 dagegen direkt in die Basisstation 2, insbesondere als Softwaremodul, integriert.

In den Figuren 3A, 3B, 3C und 3D sind verschiedene Ausführungsbeispiele von elektrischen Funktionseinheiten gezeigt. Diejenigen elektrischen Funktionseinheiten, die mit anderen elektrischen Funktionseinheiten verbunden werden können und die Daten über andere elektrische Funktionseinheiten oder mit anderen elektrischen Funktionseinheiten austauschen können, werden auch als Knoten 15 bezeichnet. Die Mobilfunk-Site 1 umfasst zumindest n Knoten 15₁, ..., 15ₙ mit n ≥ 3. In FIG. 3A ist ein solcher Knoten 15 in Form eines Combiners 6, 6a dargestellt. Der gezeigte Combiner 6, 6a wird am unteren Ende des Antennenmasts an die Basisstationen 2 angeschlossen. Es handelt sich daher bei diesem um einen basisstationsseitigen Combiner 6, 6a. In FIG. 3B ist dagegen ein Knoten 15 in Form eines weiteren Combiners 6, 6b dargestellt, welcher auf dem Antennenmast in der Nähe der Antennenanordnung 3 angebracht und mit dieser verbunden ist. Es handelt sich bei diesem um einen antennenseitigen Combiner 6, 6b. Der Knoten 15 aus FIG. 3C ist ein (SingleBand oder DualBand) DTMA 5. Der Knoten 15 aus FIG. 3D ist die Antennenanordnung 3. In dieser kann auch die RET-Einheit 4 angeordnet sein. Jeder Knoten 15; 15₁, ..., 15ₙ umfasst m Ports 16₁, ..., 16ₘ mit m ≥ 1. Ein Port 16₁, ..., 16ₘ ist auch als Anschluss zu verstehen, wobei die Kommunikation vorzugsweise in beide Richtungen erfolgt (ggf. Full-duplex oder Half-duplex). Über diesen Port 16₁, ..., 16ₘ kann ein Knoten 15₁, ..., 15ₙ mit dem Port 16₁, ..., 16ₘ eines anderen Knotens 15₁, ..., 15ₙ verbunden werden. Hierzu wird ein (z.B. Kupfer-)Kabel verwendet, wozu auch das jeweilige Speisekabel 9a, 9b gehören kann.

Über die einzelnen Ports 16₁, ..., 16ₘ können sowohl Mobilfunksignale als auch Steuerbefehle (z.B. in Form von AISG-Signalen) und/oder eine Gleichspannung zur Versorgung der Antennenanordnung 3 übertragen werden.

Insbesondere gibt es Knoten 15₁, ..., 15ₙ, die als End-Knoten fungieren. Hierzu gehört beispielsweise die Antennenanordnung 3 aus FIG. 3D oder die Basisstation 2. An einen solchen End-Knoten werden keine weiteren Knoten zur Vergrößerung der Mobilfunk-Site 1 angeschlossen. Dagegen gibt es auch Transit-Knoten, die an einem oder mehreren Ports 16₁, ..., 16ₘ Signale und/oder Spannungen entgegennehmen, um diese auf einem anderen Port 16₁, ..., 16ₘ wieder auszugeben und einem anderen Knoten 15₁, ..., 15ₙ zur Verfügung zu stellen. Derartige Transit-Knoten sind in den Figuren 3A, 3B und 3C dargestellt. Bei ihnen handelt es sich insbesondere um Combiner 6 und DTMAs 5.

Ein Combiner 6 umfasst mehrere Signalanschlüsse, denen unterschiedliche Mobilfunkbänder zugeführt werden bzw. von denen unterschiedliche Mobilfunkbänder empfangen werden und einen gemeinsamen Anschluss, von dem unterschiedliche Mobilfunkbänder überlagert ausgegeben oder von dem unterschiedliche Mobilfunkbänder überlagert empfangen werden. In FIG. 3A handelt es sich bei dem gemeinsamen Anschluss um den Port 16₁ und bei den Signalanschlüssen um die Ports 16₂, 16₃. In FIG. 3B handelt es sich bei dem gemeinsamen Anschluss um den Port 16₃ und bei den Signalanschlüssen um die Ports 16₁, 16₂. Die Combiner 6 sind dabei bevorzugt in Cavity-Bauweise aufgebaut. Entsprechende Filterpfade verbinden den gemeinsamen Anschluss mit den Signalanschlüssen, wobei die Filterpfade als Bandpässe wirken und vorzugsweise jeweils nur ein Mobilfunkband passieren lassen. Niederfrequente Signale (z.B. Steuersignale wie AISG-Signale) und Gleichspannungen können hierüber nicht übertragen werden. Diese werden daher an den Signalanschlüssen über Tiefpässe ausgekoppelt und vorzugsweise über eine separate Leiterplatte geführt, um diese am gemeinsamen Anschluss wieder einzukoppeln (oder umgekehrt).

Die Knoten 15₁, ..., 15ₙ umfassen noch eine Steuereinrichtung 17. Bei dieser Steuereinrichtung 17 kann es sich beispielsweise um einen Mikrocontroller oder FPGA handeln. Diese Steuereinrichtung 17 ist dazu ausgebildet, eine Kommunikationsverbindung über die einzelnen Ports 16₁, ..., 16ₘ zu unterbinden. Bei einer solchen Kommunikationsverbindung handelt es sich um Kommunikationssignale (insbesondere um niederfrequente Signale, aber beispielsweise auch um solche, die zwischen einzelnen Mobilfunkbändern liegen oder aber auch anderweitig gemultiplext sind (z.B. Code-,...)), also vorzugsweise nicht um die Mobilfunksignale selbst. Insbesondere kann eine Kommunikationsverbindung, die über eine Filterstruktur ausgekoppelt ist, durch die Steuereinrichtung 17 unterbunden werden. Vorzugsweise sind die Combiner 6 und/oder die DTMAs 5 derart aufgebaut, dass eine Gleichspannung, die an einem Port 16₁, ..., 16ₘ hinzugefügt wird, auch an zumindest einem anderen Port 16₁, ..., 16ₘ ausgegeben werden kann. Steuersignale (z.B. AISG-Signale) oder andere Kommunikationssignale, die zur Kommunikation der elektrischen Funktionseinheiten untereinander dienen und keine Mobilfunksignale sind, können ebenfalls von einem Port 16₁, ..., 16ₘ an einen anderen Port 16₁, ..., 16ₘ übertragen werden (insbesondere bidirektional). Vorzugsweise befindet sich in diesem Übertragungspfad innerhalb des Combiners 6 oder des DTMAs 5 eine Schalteinrichtung, die diese Übertragung auf Layer-1-Ebene unterbrechen kann. Die Gleichspannungsversorgung ist hiervon vorzugsweise nicht betroffen. Aus diesem Grund umfasst der Combiner 6 bzw. der DTMA 5 beispielsweise noch eine weitere Frequenzweiche, die eine Gleichspannung von einem Steuersignal (Kommunikationssignal wie z.B. AISG-Signal) auftrennt. Grundsätzlich wäre es auch möglich, dass Steuersignale, die an einem Port 16₁, ..., 16ₘ anliegen, durch die Steuervorrichtung 17 erfasst werden und an einem anderen Port 16₁, ..., 16ₘ ausgegeben werden. In diesem Fall könnte eine Unterbrechung auf einer höheren Protokollebene (höherer Layer) stattfinden.

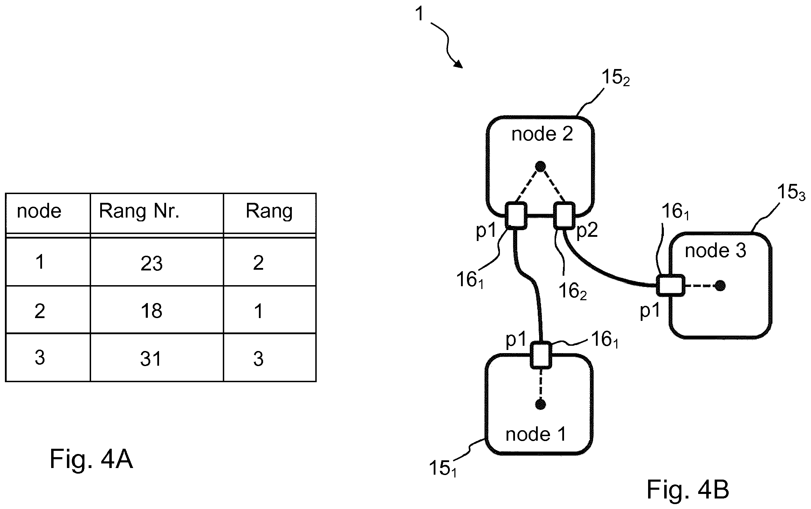

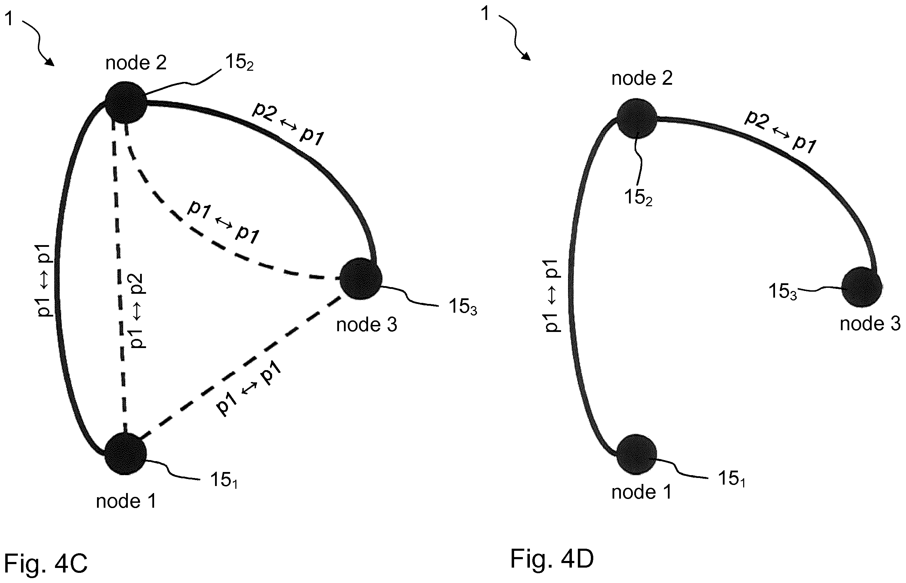

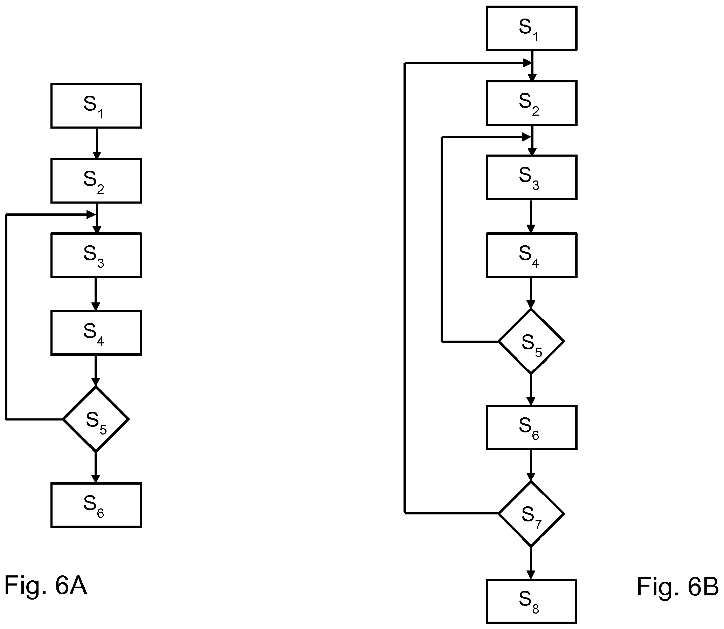

In den Figuren 4A, 4B, 4C und 4D wird anhand eines einfachen Ausführungsbeispiels erläutert, wie eine Topologie in einer Mobilfunk-Site 1 erfindungsgemäß bestimmt werden kann. Zur Erläuterung wird in diesem Zusammenhang auf die Flussdiagramme der Figuren 6A und 6B verwiesen.

Die beispielhafte, stark vereinfachte Mobilfunk-Site 1 ist gemäß FIG. 4B aufgebaut. Sie umfasst drei Knoten 15₁, 15₂ und 15₃. Der Knoten 15₁ umfasst einen Port 16₁, wohingegen der Knoten 15₂ zwei Ports 16₁, 16₂ umfasst und wobei der Knoten 15₃ wiederum einen Port 16₁ aufweist.

In diesem Ausführungsbeispiel ist der erste Port 16₁ des ersten Knotens 15₁ mit dem ersten Port 16₁ des zweiten Knotens 15₂ elektrisch verbunden. Weiterhin ist der erste Port 16₁ des dritten Knotens 15₃ elektrisch mit dem zweiten Port 16₂ des zweiten Knotens 15₂ verbunden.

In einem ersten Verfahrensschritt S₁ wird die Anzahl der vorhandenen Knoten 15₁, 15₂ und 15₃ ermittelt, die miteinander kommunizieren können. Dies kann beispielsweise dadurch erfolgen, dass die jeweiligen Steuervorrichtungen 17 innerhalb eines Knotens 15₁, ..., 15ₙ nacheinander ihre Anwesenheit im Rahmen eines Kommunikationssignals (z.B. Broadcast an allen ihren Ports 16₁, ..., 16ₘ) aussenden, wobei dieses Kommunikationssignal ergänzend noch Informationen über den Typ, die Anzahl der Ports 16₁, ..., 16ₘ und/oder einen individuellen Rang enthalten kann. Bevorzugt ist der Aufbau der Knoten 15₁, ..., 15ₙ derart gewählt, dass sich kein Ringschluss ergibt. Dies ist beim Aufbau einer klassischen Mobilfunk-Site 1 auch nicht erwünscht, denn hier werden die Kommunikationssignale lediglich von den Basisstationen 2 in Richtung der Antennenanordnung 3 und von der Antennenanordnung 3 in Richtung der Basisstationen 2 übertragen. Es wäre auch möglich, dass die Anzahl der Knoten 15₁, ..., 15ₙ vorgegeben ist. Dann könnte beispielsweise lediglich überprüft werden, ob diese auch entsprechend wie gewünscht miteinander verschalten sind.

Die Information über die Anzahl der vorhandenen Knoten 15₁, ..., 15ₙ wird dabei von einer übergeordneten Steuereinheit (nicht dargestellt) oder von der Steuervorrichtung 17 eines Knotens 15₁, ..., 15ₙ gespeichert. In diesem Verfahrensschritt S₁ kann jedem Knoten 15₁, ..., 15ₙ ein individueller Rang zugewiesen werden. Eine solche Zuordnung ist beispielsweise in FIG. 4A dargestellt. Der erste Knoten 15₁ hat den Rang "2", der zweite Knoten 15₂ hat den Rang "1" und der dritte Knoten 15₃ hat den Rang "3". Dieser Rang jedes Knotens 15₁, ..., 15ₙ kann sich aus individuellen Merkmalen ergeben bzw. kann aus individuellen Merkmalen abgeleitet werden. In diesem Fall ergibt sich der Rang aus der individuellen Rangnummer, die in diesem Fall der Seriennummer entspricht. So hat der zweite Knoten 15₂ die Seriennummer "18", welche, verglichen mit den anderen Seriennummern "23" und "31" die in diesen Fall niedrigste Zahl darstellt, woraus sich der niedrigste Rang ergibt. Wie der Rang ermittelt wird, ist allerdings beliebig. Wichtig ist nur, dass jeder Knoten 15₁, ..., 15ₙ einen individuellen Rang besitzt, der von keinem anderen Knoten 15₁, ..., 15ₙ verwendet wird.

In einem zweiten Verfahrensschritt S₂ wird einer der ermittelten n Knoten 15₁, ..., 15ₙ als Master-Knoten und die anderen n-1 Knoten 15₁, ..., 15ₙ als Slave-Knoten 15₁, ..., 15ₙ festgelegt. In dem Ausführungsbeispiel wird der Knoten 15₁, ..., 15ₙ mit dem niedrigsten Rang als Master-Knoten festgelegt. Hierbei handelt es sich in diesem Fall um den zweiten Knoten 15₂.

In einem dritten Verfahrens schritt S₃ wird ein Slave-Knoten 15₁, ..., 15ₙ als Prüf-Slave-Knoten ausgewählt. Der Prüf-Slave-Knoten kann beispielsweise derjenige Knoten 15₁, ..., 15ₙ sein, welcher den nächstniedrigeren Rang verglichen zu dem Master-Knoten aufweist. In diesem Fall handelt es sich bei dem Prüf-Slave-Knoten um den ersten Knoten 15₁. Weiterhin findet ein (temporäres) Unterbinden einer Kommunikation der anderen n-2 Slave-Knoten statt. In diesem Fall (es sind lediglich drei Knoten 15₁, ..., 15₃ dargestellt) wird lediglich die Kommunikation an dem dritten Knoten 15₃ unterbunden. Dieses Unterbinden findet vorzugsweise an allen Ports 16₁, ..., 16ₘ der Slave-Knoten statt. Das Unterbinden kann für eine vorbestimmte Zeitdauer erfolgen oder solange, bis durch die entsprechenden Slave-Knoten ein Triggersignal empfangen wird.

In einem vierten Verfahrensschritt S₄ wird geprüft, über welche der m Ports 16₁, ..., 16ₘ des Master-Knotens, also des zweiten Knotens 15₂, und über welche der m Ports 16₁, ..., 16ₘ des Prüf-Slave-Knotens, also des ersten Knotens 15₁, eine Kommunikation zwischen dem Master-Knoten und dem Prüf-Slave-Knoten möglich ist. Die entsprechenden Ports 16₁, ..., 16ₘ des Master-Knotens und des Prüf-Slave-Knotens werden entsprechend gespeichert.

Im Anschluss daran wird der fünfte Verfahrensschritt S₅ ausgeführt. In diesem Verfahrensschritt werden der dritte und der vierte Verfahrensschritt S₃, S₄ für jeden weiteren Slave-Knoten ausgeführt, wobei im dritten Verfahrensschritt S₃ jeweils ein anderer Slave-Knoten als Prüf-Slave-Knoten ausgewählt wird. In dem Ausführungsbeispiel aus FIG. 4B wird daher der dritte Knoten 15₃ als neuer Prüf-Slave-Knoten ausgewählt. Im Folgenden wird dann überprüft, ob und wenn ja über welche Ports 16₁, ..., 16ₘ des Master-Knotens, also des zweiten Knotens 15₂ und des neuen Prüf-Slave-Knotens, also des dritten Knotens 15₃, eine Kommunikation zueinander hergestellt werden kann. Die entsprechenden Ports 16₁, ..., 16ₘ werden sowohl für den Master-Knoten als auch für den neuen Prüf-Slave-Knoten gespeichert.

Im Anschluss daran kann der sechste Verfahrensschritt S₆ ausgeführt werden. In diesem Verfahrensschritt wird eine Anschlusstopologie für den Master-Knoten, in diesem Fall für den zweiten Knoten 15₂, erstellt.

Im Folgenden wird gemäß FIG. 6B der siebte Verfahrensschritt S₇ ausgeführt. In diesem Verfahrensschritt S₇ werden die zweiten, dritten, vierten, fünften und sechsten Verfahrensschritte S₂ bis S₆ wiederholt. Im zweiten Verfahrensschritt S₂ wird allerdings ein anderer Knoten 15₁, ..., 15ₙ als (neuer) Master-Knoten festgelegt. Bei diesem anderen Knoten 15₁, ..., 15ₙ handelt es sich um einen der früheren Slave-Knoten, zu denen auch der frühere Prüf-Slave-Knoten zählen kann. Die übrigen Knoten 15₂, ..., 15ₙ, mit Ausnahme des alten Master-Knotens, werden wiederum als Slave-Knoten festgelegt. Diese Slave-Knoten, zu den auch der vorherige Prüf-Slave-Knoten zählen kann, werden abwechselnd (für jedes Mal wo der Verfahrensschritt S₅ ausgeführt wird) als neuer Prüf-Slave-Knoten festgelegt. Nun wird für den neuen Master-Knoten eine entsprechende Anschlusstopologie erzeugt. Der siebte Verfahrensschritt S₇ wird dabei so oft ausgeführt, bis zumindest n-1 Knoten 15₁, ..., 15ₙ einmal als Master-Knoten fungiert haben. Die Anschlusstopologie für den letzten Knoten 15ₙ kann anhand der bereits ermittelten Anschlusstopologien für die bisherigen Master-Knoten erzeugt werden.

Eine entsprechende Anschlusstopologie für den ersten, zweiten und dritten Knoten 15₁, 15₂ und 15₃ kann FIG. 4C entnommen werden. Mit einer durchgezogenen Linie sind die Verbindungen zwischen den jeweiligen Ports 16₁, ..., 16ₘ der jeweiligen Knoten 15₁, ..., 15₃ dargestellt, über die eine Kommunikationsverbindung erfolgreich war. Durch die gestrichelten Linien wird symbolisiert, dass eine Kommunikationsverbindung zwischen den angegebenen Ports 16₁, ..., 16ₘ der jeweiligen Knoten 15₁, ..., 15₃ nicht möglich war. In FIG. 4D ist eine bereinigte Topologie dargestellt, wobei die nicht erfolgreichen Kommunikationsverbindungen nicht dargestellt sind.

Die Art und Weise wie ermittelt wird, ob eine Kommunikation zwischen zwei Ports 16₁, ..., 16ₘ von zwei verschiedenen Knoten 15₁, ..., 15ₙ möglich ist, kann beliebig erfolgen. Es kann hierzu das AISG-Protokoll oder irgendein anderes Protokoll (IP, SPI, I²C, usw.) verwendet werden. Im einfachsten Fall kann eine niederfrequente Wechselspannung auf die Leitung aufmoduliert werden. Bevorzugt ist die Kommunikationsverbindung allerdings niederfrequent, so dass diese zuverlässig von denjenigen Knoten 15₁, ..., 15ₙ an ihren jeweiligen Ports 16₁, ..., 16ₘ unterbrochen oder herausgefiltert werden kann, die nicht als Master-Knoten oder als Prüf-Slave-Knoten ausgewählt sind.

Grundsätzlich können im siebten Verfahrensschritt S₇ die zugewiesenen Ränge der einzelnen Knoten 15₁, ..., 15ₙ beibehalten werden. Es ist auch möglich, dass die bisherigen Slave-Knoten, zu denen auch der Prüf-Slave-Knoten zählt, neue Ränge zugewiesen bekommen.

Im Anschluss an den siebten Verfahrensschritt S₇ wird der achte Verfahrensschritt S₈ ausgeführt. In diesem Verfahrensschritt S₈ wird eine (Gesamt-)Topologie der Mobilfunk-Site 1 erstellt. Hierzu werden die einzelnen Anschlusstopologien für die jeweiligen Knoten 15₁, ..., 15ₙ verwendet und zusammengesetzt. Hieraus ergeben sich dann die Figuren 4C und 4D.

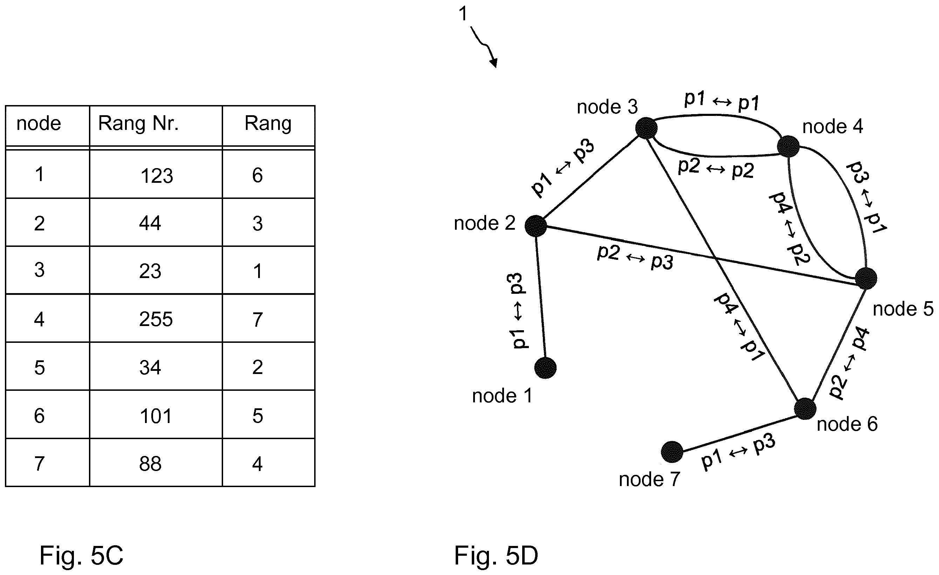

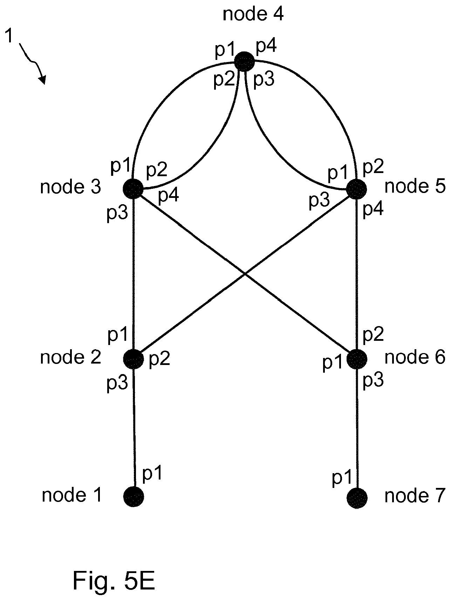

Die Figuren 5A, 5B, 5C, 5D und 5E zeigen ein detaillierteres Ausführungsbeispiel einer beispielhaften Mobilfunk-Site 1 und erläutern, wie deren Topologie ermittelt werden kann. Auch in diesem Fall werden die Verfahrensschritte S₁ bis S₈ ausgeführt, wie diese bereits im Hinblick auf die Figuren 4A bis 4D erläutert wurden. Die dargestellten elektrischen Funktionseinheiten sind in den Figuren 3A bis 3D näher erläutert.

Bezugnehmend auf die Figuren 5A und 5B ist dargestellt, dass die dortige Mobilfunk-Site über sieben Knoten 15₁, 15₂, 15₃, 15₄, 15₅, 15₆ und 15₇ verfügt (n=7). Beim ersten und beim siebten Knoten 15₁, 15₇ handelt es sich um basisstationsseitige Combiner 6, 6a, wie diese in FIG. 3A beschrieben wurden. An den Signalanschlüssen jedes dieser Combiner 6, 6a werden unterschiedliche Basisstationen 2 angeschlossen. Über die Speisekabel 9a, 9b sind die basisstationsseitigen Combiner 6, 6a mit den antennenseitigen Combinern 6, 6b elektrisch verbunden wie diese in FIG. 3B beschrieben wurden. Bei den antennenseitigen Combinern 6, 6b handelt es sich um den zweiten und den sechsten Knoten 15₂, 15₆.

Die antennenseitigen Combiner 6, 6b sind mit entsprechenden SingleBand-DTMAs 5 verbunden wie diese in FIG. 3C beschrieben wurden. Ein erster SingleBand-DTMA 5 ist in diesem Fall der dritte Knoten 15₃, wohingegen ein zweiter SingleBand-DTMA der fünfte Knoten 15₅ ist. Gemäß FIG. 5B ist der zweite Knoten 15₂ sowohl mit dem dritten Knoten 15₃ als auch mit dem fünften Knoten 15₅ verbunden. Der sechste Knoten 15₆ ist ebenfalls mit dem dritten Knoten 15₃ und dem fünften Knoten 15₅ verbunden. Der dritte und der fünfte Knoten 15₃, 15₅ sind mit dem vierten Knoten 15₄ verbunden, bei welchem es sich um einen End-Knoten in Form der Antennenanordnung 3 handelt, wie diese in FIG. 3D beschrieben wurde.

In dieser Antennenanordnung 3 können beispielsweise die RET-Einheit 4 und/oder diverse Überwachungseinheiten angeordnet sein.

Im ersten Verfahrensschritt S₁ werden die vorhandenen Knoten 15₁ bis 15₇ ermittelt, wobei gleichzeitig eine Rangliste erstellt wird. In dem Ausführungsbeispiel hat der dritte Knoten 15₃ den niedrigsten Rang und der vierte Knoten 15₄ den höchsten Rang. In diesem Fall könnte der dritte Knoten 15₃ im zweiten Verfahrensschritt S₂ als Master-Knoten festgelegt werden. Nachdem die Verfahrensschritte S₁ bis S₆ ausgeführt wurden, liegt die Anschlusstopologie für den Master-Knoten vor. Im Anschluss daran wird der siebte Verfahrensschritt S₇ noch zumindest fünfmal ausgeführt, wobei danach die Anschlusstopologie für n-1 Knoten 15₁, ..., 15ₙ₋₁ vorliegt. Die Anschlusstopologie für den n-ten Knoten 15ₙ kann aus den anderen Anschlusstopologien ermittelt werden. Im Anschluss daran wird der achte Verfahrensschritt S₈ ausgeführt und die (Gesamt-)Topologie der Mobilfunk-Site 1 ermittelt, wie diese in FIG. 5D dargestellt ist. Die durchgezogene Linie zeigt an, über welche Ports 16₁, ..., 16ₘ die jeweiligen Knoten 15₁, ..., 15ₙ miteinander verbunden sind. FIG. 5E zeigt eine andere Ansicht der FIG. 5D, wobei die einzelnen Knoten 15₁, ..., 15ₙ entsprechend der Struktur aus FIG. 5B angeordnet sind.

In den Figuren 6A bis 6E werden verschiedene Flussdiagramme gezeigt, die das erfindungsgemäße Verfahren zur Topologiebestimmung näher erläutern. Der Ablauf der Flussdiagramme in den Figuren 6A und 6B wurden bereits beschrieben.

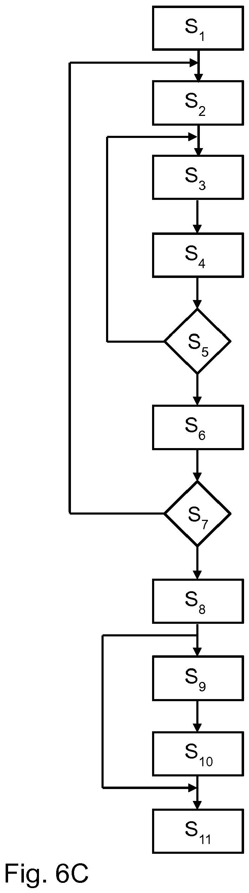

In FIG. 6C ist noch ein erweitertes Flussdiagramm des Verfahrens aus den Figuren 6A und 6B dargestellt. Das Flussdiagramm in FIG. 6C umfasst die zusätzlichen Verfahrensschritte S₉, S₁₀ und S₁₁. Im optionalen neunten Verfahrensschritt S₉ wird die erstellte (Gesamt-)Topologie mit einer Referenztopologie verglichen. Dies kann von einem der Knoten 15₁, ..., 15ₙ oder von einer nicht dargestellten Steuervorrichtung erledigt werden.

In einem darauffolgenden zehnten Verfahrens schritt S₁₀ werden Abweichungen zwischen der erstellten (Gesamt-)Topologie und der Referenztopologie ermittelt bzw. ausgegeben.

In einem elften Verfahrensschritt S₁₁ wird die erstellte (Gesamt-)Topologie der Mobilfunk-Site 1 an die übergeordnete Leit- und Steuereinrichtung übertragen. Es wäre hier auch möglich, dass die ermittelten Abweichungen an die übergeordnete Leit- und Steuereinrichtung übertragen werden. Dies kann über eine Kommunikationseinrichtung wie z.B. einen Hub, Switch, Router, Gateway und/oder Modem erfolgen. Über diese Kommunikationseinrichtung kann das Verfahren auch von der übergeordneten Leit- und Steuereinrichtung gestartet werden. Grundsätzlich kann das Verfahren auch von einem Computer (z.B. Laptop) oder einem Smartphone direkt vor Ort an der Mobilfunk-Site 1 gestartet werden.

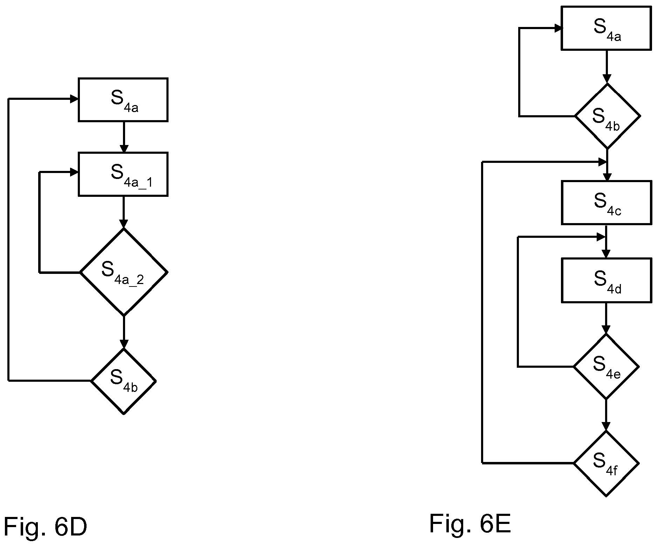

In den Figuren 6D und 6E wird ein Ausführungsbeispiel näher erläutert, wie der vierte Verfahrensschritt S₄ genauer ausgestaltet sein könnte. In dem vierten Verfahrensschritt S₄ wird geprüft, über welche der m Ports 16₁, ..., 16ₘ des Master-Knotens und über welche der m Ports 16₁, ..., 16ₘ des Prüf-Slave-Knotens eine Kommunikation zwischen dem Master-Knoten und dem Prüf-Slave-Knoten möglich ist. In einem dortigen Verfahrensschritt S₄ₐ wird festgestellt, ob eine Kommunikationsverbindung zu dem Prüf-Slave-Knoten durch eine exklusive Kommunikation über lediglich einen der m Ports 16₁, ..., 16ₘ des Master-Knotens hergestellt werden kann. Falls dies möglich ist, dann wird dieser eine Port 16₁, ..., 16ₘ für den Master-Knoten gespeichert. Grundsätzlich ist es hier möglich, dass der Master-Knoten ein Kommunikationssignal aussendet. Im Anschluss daran wird der Verfahrensschritt S_{4b} ausgeführt (siehe FIG. 6E). In diesem Verfahrens schritt wird der Verfahrensschritt S₄ₐ so lange wiederholt, bis für alle m Ports 16₁, ..., 16ₘ des Master-Knotens exklusiv versucht wurde, eine Kommunikationsverbindung zu dem Prüf-Slave-Knoten herzustellen.

In einem Ausführungsbeispiel kann dann der Verfahrensschritt S_{4c} ausgeführt werden. In diesem Verfahrensschritt wird einer der Ports 16₁, ..., 16ₘ am Master-Knoten zur Kommunikation mit dem Prüf-Slave-Knoten ausgewählt und eine Kommunikation auf den anderen Ports 16₁, ..., 16ₘ des Master-Knotens unterbunden. Im Weiteren wird der Verfahrensschritt S_{4d} ausgeführt, in welchem eine Kommunikation an allen bis auf einen Port 16₁, ..., 16ₘ des Prüf-Slave-Knotens unterbunden wird. Dieser eine Port des Prüf-Slave-Knotens wird gespeichert, falls eine Kommunikationsverbindung zu dem Master-Knoten über diesen Port 16₁, ..., 16ₘ hergestellt werden kann. In diesem Zusammenhang wird auch der entsprechende Port 16₁, ..., 16ₘ des Master-Knotens gespeichert, so dass bei Erstellen der Anschlusstopologie die beiden Ports 16₁, ..., 16ₘ des Master-Knotens und des Prüf-Slave-Knotens als vernetzt angesehen werden.

In einem darauffolgenden Verfahrens schritt S₄ₑ wird der vorherige Verfahrensschritt S_{4d} so lange wiederholt, bis für alle weiteren m-1 Ports 16₁, ..., 16ₘ des Prüf-Slave-Knotens exklusiv versucht wurde, eine Kommunikationsverbindung zu dem Master-Knoten herzustellen. Erfolgreiche Kommunikationsverbindungen werden entsprechend gespeichert. Der Verfahrensschritt S₄ₑ wird z.B. von dem Master-Knoten initiiert oder selbstständig (z.B. nach Zeitablauf) durch den Prüf-Slave-Knoten ausgeführt.

Im Anschluss daran wird der Verfahrensschritt S_{4f} ausgeführt, in welchem die vorherigen Verfahrensschritte für alle weiteren Ports 16₁, ..., 16ₘ des Master-Knotens wiederholt werden. Dies gilt dabei nur für diejenigen Ports 16₁, ..., 16ₘ, für die im Verfahrensschritt S₄ₐ ermittelt werden konnte, dass eine Kommunikationsverbindung zu dem Prüf-Slave-Knoten grundsätzlich möglich ist.

Anstelle der Verfahrensschritte S_{4c}, S_{4d}, S₄ₑ und S_{4f} könnten auch die Verfahrensschritte S_{4a_1} und S_{4a_2} ausgeführt werden. Der Verfahrensschritt S_{4a_1} wird im Verfahrensschritt S₄ₐ ausgeführt. In diesem Verfahrensschritt wird die Kommunikation an allen bis auf einen Port 16₁, ..., 16ₘ des Prüf-Slave-Knotens unterbunden und dieser eine Port 16₁, ..., 16ₘ für den Prüf-Slave-Knoten gespeichert, falls eine Kommunikationsverbindung zu dem Master-Knoten über diesen Port hergestellt werden kann. In dem Verfahrensschritt S₄ₐ ist ja gerade nur ein Port 16₁, ..., 16ₘ des Master-Knotens aktiv, so dass bei einer erfolgreichen Kommunikationsverbindung ein entsprechendes Paar an Ports 16₁, ..., 16ₘ gespeichert werden kann. Im Anschluss daran wird der Verfahrensschritt S_{4a_2} ausgeführt, in welchem der Verfahrensschritt S_{4a_1} so lange wiederholt wird, bis für alle weiteren m-1 Ports 16₁, ..., 16ₘ des Prüf-Slave-Knotens exklusiv versucht wurde, eine Kommunikationsverbindung zu dem einen aktiv geschalteten Master-Knoten herzustellen. Der Verfahrensschritt S_{4a_2} wird z.B. von dem Master-Knoten initiiert oder selbstständig (z.B. nach Zeitablauf) durch den Prüf-Slave-Knoten ausgeführt.

Durch Wiederholung des Schrittes S_{4b} gemäß FIG. 6D wird ein anderer Port 16₁, ..., 16ₘ des Master-Knotens aktiv geschalten bzw. es wird für die anderen Ports 16₁, ..., 16ₘ des Master-Knotens exklusiv (also iterierend) versucht, eine Kommunikationsverbindung zu dem Prüf-Slave-Knoten herzustellen. Durch die Wiederholung der entsprechenden Verfahrensschritte S_{4a_1} und S_{4a_2} werden dann alle oder die weiteren Ports 16₁, ..., 16ₘ am Prüf-Slave-Knoten getestet. Grundsätzlich könnte es möglich sein, dass mehrere Ports 16₁, ..., 16ₘ des Master-Knotens mit ein und demselben Port 16₁, ..., 16ₘ des Prüf-Slave-Knotens verbunden sind. In diesem Fall würde für jeden Port 16₁, ..., 16ₘ des Masterknotens versucht werden, ob eine Kommunikationsverbindung zu jedem Port 16₁, ..., 16ₘ des Prüf-Slave-Knotens herstellbar ist.

Jeder Knoten 15₁, ..., 15ₙ kann unterschiedlich viele Ports 16₁, ..., 16ₘ haben, muss aber zumindest einen Port 16₁, ..., 16ₘ haben. Die Art der Kommunikation zwischen zwei Knoten 15₁, ..., 15ₙ kann sich von der Art der Kommunikation zwischen zwei anderen Knoten 15₁, ..., 15ₙ unterscheiden. Grundsätzlich wäre es auch möglich, dass die Art der Kommunikation für alle Knoten 15₁, ..., 15n gleich ist.

Die Prüfung, ob eine Kommunikation zwischen zwei Ports 16₁, ..., 16ₘ unterschiedlicher Knoten 15₁, ..., 15ₙ möglich ist, kann z.B. durch Time-Outs ermittelt werden. Kommt in einer bestimmten, festlegbaren Zeitspanne keine Kommunikation zustande, so kann für diese Ports 16₁, ..., 16ₘ festgehalten werden, dass keine direkte Verbindung zwischen diesen beiden existiert.

## Patentansprüche

1. Verfahren zur Topologiebestimmung in einer Mobilfunk-Site (1), wobei:
- die Mobilfunk-Site (1) n Knoten (15₁, ..., 15ₙ), mit n ≥ 3, oder n ≥ 4 umfasst; und
- jeder Knoten (15₁, ..., 15ₙ) m Ports (16₁, ..., 16ₘ), mit m ≥ 1 aufweist und wobei jeder Knoten (15₁, ..., 15ₙ) eine elektrische Funktionseinheit ist;
- jeder der n Knoten (15₁, ..., 15ₙ) ist über zumindest einen seiner m Ports (16₁, ..., 16ₘ) mit zumindest einem weiteren der n Knoten (15₁, ..., 15ₙ) über zumindest einen von dessen m Ports (16₁, ..., 16ₘ) elektrisch und/oder elektromagnetisch zur Kommunikation verbunden;
**dadurch gekennzeichnet, dass** das Verfahren die nachfolgenden Verfahrensschritte umfasst:
- Ermitteln (S₁) der Anzahl der vorhandenen Knoten (15₁, ..., 15ₙ);
- Festlegen (S₂) von einem der ermittelten n Knoten (15₁, ..., 15ₙ) als Master-Knoten und den anderen Knoten als Slave-Knoten;
- Auswählen (S₃) eines Slave-Knotens als Prüf-Slave-Knoten und unterbinden einer Kommunikation der anderen Slave-Knoten;
- Prüfen (S₄) über welche der m Ports (16₁, ..., 16ₘ) des Master-Knotens und über welche der m Ports (16₁, ..., 16ₘ) des Prüf-Slave-Knotens eine Kommunikation zwischen dem Master-Knoten und dem Prüf-Slave-Knoten möglich ist und Speichern dieser Ports (16₁, ..., 16ₘ);
- Wiederholen (S₅) der Verfahrensschritte Auswählen (S₃) und Prüfen (S₄) für jeden der weiteren Slave-Knoten, wobei im Verfahrens schritt Auswählen (S₃) jeweils ein anderer Slave-Knoten als Prüf-Slave-Knoten ausgewählt wird;
- Erzeugen (S₆) einer Anschlusstopologie für den Master-Knoten.

2. Verfahren nach Anspruch 1, **gekennzeichnet durch** den folgenden Verfahrensschritt.
- Wiederholtes Ausführen (S₇) der Verfahrensschritte:
a) Festlegen (S₂);
b) Auswählen (S₃);
c) Prüfen (S₄);
d) Wiederholen (S₅), und
e) Erzeugen (S₆);
wobei im Verfahrensschritt Festlegen (S₂) einer der bisherigen Slave-Knoten als neuer Master-Knoten festgelegt wird und wobei der Verfahrensschritt wiederholtes Ausführen (S₇) sooft ausgeführt wird, bis zumindest n-1 Knoten (15₁, ..., 15ₙ) einmal als Master-Knoten festgelegt wurden.

3. Verfahren nach Anspruch 2, **dadurch gekennzeichnet, dass** zumindest einer der n Knoten (15₁, ..., 15ₙ) neben den m Ports (16₁, ..., 16ₘ) noch über zumindest eine zusätzliche drahtgebundene oder drahtlose Schnittstelle verfügt und dazu ausgebildet ist, über diese zumindest eine zusätzliche Schnittstelle mit weiteren Netzwerken oder Geräten zu kommunizieren, wobei der folgende Verfahrensschritt ausgeführt wird:
- Hinzufügen der zumindest einen zusätzlichen Schnittstelle in die Anschlusstopologie für den zumindest einen der n Knoten (15₁, ..., 15ₙ).

4. Verfahren nach Anspruch 2 oder 3, **gekennzeichnet durch** den folgenden Verfahrensschritt:
- Erstellen einer Topologie (S₈) der Mobilfunk-Site (1) anhand der in den Verfahrensschritten Erzeugen (S₆) erstellten Anschlusstopologien der einzelnen Knoten (15₁, ..., 15ₙ), wobei die Topologie der Mobilfunk-Site (1) angibt, mit welchem weiteren Knoten (15₁, ..., 15ₙ) oder welchen weiteren Knoten (15₁, ..., 15ₙ) jeder Knoten (15₁, ..., 15ₙ) insbesondere zum Datenaustausch verbunden ist.

5. Verfahren nach Anspruch 4, **gekennzeichnet durch** den folgenden Verfahrensschritt:
- Im Verfahrens schritt Erstellen einer Topologie (S₈) werden die Anschlusstopologien der einzelnen Knoten (15₁, ..., 15ₙ) an einen Knoten (15₁, ..., 15ₙ) oder an eine Steuervorrichtung übertragen, wobei der Knoten (15₁, ..., 15ₙ) oder die Steuervorrichtung die Topologie der Mobilfunk-Site (1) aus den einzelnen Anschlusstopologien erstellt.

6. Verfahren nach Anspruch 4 oder 5, **gekennzeichnet durch** die folgenden Verfahrensschritte:
- Vergleichen (S₉) der erstellten Topologie mit einer Referenztopologie;
- Ermitteln und/oder Ausgeben (S₁₀) von Abweichungen zwischen der erstellten Topologie und der Referenztopologie.

7. Verfahren nach Anspruch 5 oder 6, **dadurch gekennzeichnet, dass** die Mobilfunk-Site (1) noch eine Kommunikationseinrichtung aufweist, die dazu ausgebildet ist, Daten zu einer übergeordneten Leit- und Steuereinrichtung zu übertragen, wobei die folgenden Verfahrensschritte ausgeführt werden:
- Übertragen (S₁₁) der erstellten Topologie der Mobilfunk-Site (1) an die übergeordnete Leit- und Steuereinrichtung; und/oder Übertragen (S₁₁) der ermittelten Abweichungen zwischen der erstellten Topologie und der Referenztopologie an die übergeordnete Leit- und Steuereinrichtung.

8. Verfahren nach einem der vorherigen Ansprüche, **gekennzeichnet durch** die folgenden Verfahrensschritte:
- Im Verfahrens schritt Ermitteln (S₁) wird jedem ermittelten Knoten (15₁, ..., 15ₙ) ein individueller Rang zugewiesen;
- Im Verfahrens schritt Festlegen (S₂) wird der Knoten als (15₁, ..., 15ₙ) Master-Knoten festgelegt, dessen Rang, verglichen mit den Rängen der anderen Knoten (15₁, ..., 15ₙ), den niedrigsten oder höchsten Wert aufweist.

9. Verfahren nach Anspruch 8 und Anspruch 2, **gekennzeichnet durch** den folgenden Verfahrensschritt:
- Im Verfahrensschritt wiederholtes Ausführen (S₇) werden bei Ausführen des Verfahrensschritts Festlegen (S₂) die bereits zugewiesenen Ränge beibehalten oder es werden den bisherigen Slave-Knoten ganz oder teilweise neue Ränge zugewiesen.

10. Verfahren nach einem der vorherigen Ansprüche, **dadurch gekennzeichnet, dass** im Verfahrensschritt Auswählen (S₃) das Unterbinden der Kommunikation der anderen Slave-Knoten nur für eine vorbestimmte Zeitdauer oder bis zum Eintreten eines Triggersignals erfolgt.

11. Verfahren nach einem der vorherigen Ansprüche, **gekennzeichnet durch** die folgenden Merkmale:
der Verfahrensschritt Prüfen (S₄) umfasst die nachfolgenden Verfahrensschritte:
- Feststellen (S₄ₐ) ob eine Kommunikationsverbindung zu dem Prüf-Slave-Knoten durch eine exklusive Kommunikation über lediglich einen der m Ports (16₁, ..., 16ₘ) des Master-Knotens hergestellt werden kann und Speichern dieses einen Ports (16₁, ..., 16ₘ) für den Master-Knoten, falls eine Kommunikationsverbindung hergestellt werden kann;
- Wiederholen (S_{4b}) des Verfahrensschritts Feststellen (S₄ₐ) bis für alle m Ports (16₁, ..., 16ₘ) des Master-Knotens versucht wurde eine Kommunikationsverbindung zu dem Prüf-Slave-Knoten herzustellen.

12. Verfahren nach Anspruch 11, **gekennzeichnet durch** die folgenden Merkmale:
der Verfahrensschritt Feststellen (S₄ₐ) umfasst weiterhin die nachfolgenden Verfahrensschritte:
- Unterbinden (S_{4a_1}) einer Kommunikation an allen bis auf einem Port (16₁, ..., 16ₘ) des Prüf-Slave-Knotens und Speichern dieses einen Ports (16₁, ..., 16ₘ) für den Prüf-Slave-Knoten, falls eine Kommunikationsverbindung zu dem Master-Knoten über diesen Port (16₁, ..., 16ₘ) hergestellt werden kann;
- Wiederholen (S_{4a_2}) des Verfahrensschritts Unterbinden (S_{4a_1}) bis für alle weiteren m-1 Ports (16₁, ..., 16ₘ) des Prüf-Slave-Knotens versucht wurde eine Kommunikationsverbindung zu dem Master-Knoten herzustellen.

13. Verfahren nach Anspruch 11, **gekennzeichnet durch** die folgenden Verfahrensschritte :
- Festlegen (S_{4c}) eines Ports (16₁, ..., 16ₘ) am Master-Knoten zur Kommunikation mit dem Prüf-Slave-Knoten und Unterbinden der Kommunikation auf den anderen Ports (16₁, ..., 16ₘ) des Master-Knotens;
- Unterbinden (S_{4d}) einer Kommunikation an allen bis auf einem Port (16₁, ..., 16ₘ) des Prüf-Slave-Knotens und Speichern dieses einen Ports (16₁, ..., 16ₘ) für den Prüf-Slave-Knoten, falls eine Kommunikationsverbindung zu dem Master-Knoten über diesen hergestellt werden kann;
- Wiederholen (S₄ₑ) des Verfahrensschritts Unterbinden (S_{4d}) bis für alle weiteren m-1 Ports (16₁, ..., 16ₘ) des Prüf-Slave-Knotens versucht wurde eine Kommunikationsverbindung zu dem Master-Knoten herzustellen.

14. Verfahren nach Anspruch 13, **gekennzeichnet durch** den folgenden Verfahrensschritt:
- Erneutes Ausführen (S_{4f}) der Verfahrensschritte Festlegen (S_{4c}), Unterbinden (S_{4d}) und Wiederholen des Verfahrensschritts Unterbinden (S₄ₑ) für alle weiteren Ports (16₁, ..., 16ₘ) des Master-Knotens für den oder die im Verfahrensschritt Feststellen (S₄ₐ) ermittelt werden konnte oder konnten, dass eine Kommunikationsverbindung zu dem Prüf-Slave-Knoten hergestellt werden kann.

15. Mobilfunk-Site (1) mit n Knoten (15₁, ..., 15ₙ), mit n ≥ 3, oder n ≥ 4, wobei jeder Knoten (15₁, ..., 15ₙ) m Ports (16₁, ..., 16ₘ), mit m ≥ 1 umfasst und wobei die Mobilfunk-Site (1) dazu ausgebildet ist, das Verfahren zur Topologiebestimmung gemäß einem der Ansprüche 1 bis 14 auszuführen.

## Claims

1. Method for topology determination in a mobile communications site (1), wherein:
- the mobile communications site (1) comprises n nodes (15₁, ..., 15ₙ), where n ≥ 3, or n ≥ 4; and
- each node (15₁, ..., 15ₙ) has m ports (16₁, ..., 16ₘ), where m ≥ 1 and wherein every node (15₁, ..., 15ₙ) is an electrical functional unit;
- each one of the n nodes (15₁, .., 15ₙ) is connected electrically and/or electromagnetically via at least one of its m ports (16₁, ..., 16ₘ) to at least one other of the n nodes (15₁, ..., 15ₙ) via at least one of its m ports (16₁, ..., 16ₘ) for communications purposes;
**characterized in that** the method comprises the following method steps:
- determining (S₁) the number of existing nodes (15₁, ..., 15ₙ);
- designating (S₂) from one of the determined n nodes (15₁, ..., 15ₙ) a master node and the other node as the slave node;
- selecting (S₃) a slave node as a test slave node and preventing a communication of the other slave nodes;
- testing (S₄) via which of the m ports (16₁, ..., 16ₘ) of the master node and via which of the m ports (16₁, ..., 16ₘ) of the test slave node a communication between the master node and the test slave node is possible, and storing these ports (16₁, ..., 16ₘ);
- repeating (S₅) the method steps of selecting (S₃) and testing (S₄) for each of the other slave nodes, wherein in the method step selecting (S₃) a different slave node is selected in each case as the test slave node;
- generating (S₆) a connection topology for the master node.

2. Method according to claim 1, **characterised by** the following method step:
- repeatedly executing (S₇) the method steps:
a) designating (S₂);
b) selecting (S₃);
c) testing (S₄);
d) repeating (S₅); and
e) generating (S₆);
wherein in the method step of designating (S₂), one of the previous slave nodes is designated as the new master node, and wherein the method step of repeating the execution (S₇) is executed until at least n-1 nodes (15₁, ..., 15ₙ) have been designated once as the master node.

3. Method according to claim 2, **characterised in that** at least one of the n nodes (15₁, ..., 15ₙ) in addition to the m ports (16₁, ..., 16ₘ) also has at least one additional wired or wireless interface and is configured to communicate via this at least one additional interface with other networks or devices, wherein the following method step is executed:
- adding the at least one additional interface to the connection topology for the at least one of the n nodes (15₁, ..., 15ₙ).

4. Method according to either claim 2 or claim 3, **characterised by** the following method step:
- creating a topology (S₈) of the mobile communications site (1) using the connection topologies generated in the method step generating (S₆), of the individual nodes (15₁, .., 15ₙ), wherein the topology of the mobile communications site (1) indicates to which additional node (15₁, ..., 15ₙ) or which additional nodes (15₁, ..., 15ₙ) each node (15₁, ..., 15ₙ) is connected, in particular for exchanging data.

5. Method according to claim 4, **characterised by** the following method step:
- in the method step creating a topology (S₈), the connection topologies of the individual nodes (15₁, ..., 15ₙ) are transmitted to a node (15₁, ..., 15ₙ) or to a control device, wherein the node (15₁, ..., 15ₙ) or the control device generates the topology of the mobile communications site (1) from the individual connection topologies.

6. Method according to either claim 4 or claim 5, **characterised by** the following method steps:
- comparing (S₉) the created topology with a reference topology;
- determining and/or outputting (S₁₀) deviations between the created topology and the reference topology.

7. Method according to either claim 5 or claim 6, **characterised in that** the mobile communications site (1) also has a communications device, which is configured to transmit data to a higher-level routing and control device, wherein the following method steps are performed:
- transmitting (S₁₁) the created topology of the mobile communications site (1) to the higher-level routing and control device; and/or
transmitting (S₁₁) the determined deviations between the created topology and the reference topology to the higher-level routing and control device.

8. Method according to one of the preceding claims, **characterised by** the following method steps:
- in the method step determining (S₁), an individual rank is assigned to each of the determined nodes (15₁, ..., 15ₙ);
- in the method step designating (S₂), the node (15₁, ..., 15ₙ) whose rank has the lowest or highest value compared to the ranks of the other nodes (15₁, ..., 15ₙ), is designated as the master node.

9. Method according to claim 8 and claim 2, **characterised by** the following method step:
- in the method step repeated execution (S₇), when executing the method step designating (S₂), the already allocated ranks are retained or the previous slave nodes are assigned entirely or partially new ranks.

10. Method according to one of the preceding claims, **characterised in that** in the method step selecting (S₃), the communication of the other slave nodes is prevented only for a predetermined duration of time or until a trigger signal occurs.

11. Method according to one of the preceding claims, **characterised by** the following features:
the method step testing (S₄) comprises the following method steps:
- determining (S₄ₐ) whether a communications link to the test slave node can be created by an exclusive communication via only one of the m ports (16₁, ..., 16ₘ) of the master node and storing this one port (16₁, ..., 16ₘ) for the master node in the event that a communications link can be created;
- repeating (S_{4b}) the method step determining (S₄ₐ) until an attempt was made to create a communications link to the test slave node for all m ports (16₁, ..., 16ₘ) of the master node.

12. Method according to claim 11, **characterised by** the following features:
the method step determining (S₄ₐ) also comprises the following method steps:
- preventing (S_{4a_1}) communication on all except one port (16₁, ..., 16ₘ) of the test slave node and storing this one port (16₁, ..., 16ₘ) for the test slave node, if a communications link can be created to the master node via this port (16₁, ..., 16ₘ);
- repeating (S_{4a_2}) the method step preventing (S_{4a_1}) until an attempt was made to create a communications link to the master node for all other m-1 ports (16₁, ..., 16ₘ) of the test slave node.

13. Method according to claim 11, **characterised by** the following method steps:
- determining (S_{4c}) a port (16₁, ..., 16ₘ) on the master node for communicating with the test slave node and preventing communication on the other ports (16₁, ..., 16ₘ) of the master node;
- preventing (S_{4d}) a communication to all but one port (16₁, ..., 16ₘ) of the test slave node and storing this one port (16₁, ..., 16ₘ) for the test slave node, if a communications link to the master node can be created via said port;
- repeating (S₄ₑ) the method step preventing (S_{4d}) until an attempt has been made to create a communications link to the master node for all other m-1 ports (16₁, ..., 16ₘ) of the test slave node.

14. Method according to claim 13, **characterised by** the following method step:
- executing again (S_{4f}) the method steps of determining (S_{4c}), preventing (S_{4d}) and repeating the method step preventing (S₄ₑ) for all other ports (16₁, ..., 16ₘ) of the master node for which it was determined in the method step determining (S₄ₐ) that a communications link to the test slave node can be created.

15. Mobile communications site (1) having n nodes (15₁, ..., 15ₙ), where n ≥ 3, or n ≥ 4, wherein every node (15₁, ..., 15ₙ) comprises m ports (16₁, ..., 16ₘ), where m ≥ 1 and wherein the mobile communications site (1) is configured to execute the method for determining the topology according to one of the claims 1 to 14.

## Revendications

1. Procédé de détermination de topologie d'un site de communication mobile (1), dans lequel :
- le site de communication mobile (1) comprend n nœuds (15₁, ..., 15ₙ), où n ≥ 3 ou n ≥ 4 ; et
- chaque nœud (15₁, ..., 15ₙ) présente m ports (16₁, ..., 16ₘ), où m ≥ 1 et chaque nœud (15₁, ..., 15ₙ) est une unité fonctionnelle électrique ;
- chacun des n nœuds (15₁, ..., 15ₙ) est relié électriquement et/ou électromagnétiquement par au moins un de ses m ports (16₁, ..., 16ₘ) à au moins un autre des n nœuds (15₁, ..., 15ₙ) par au moins un de ses m ports (16₁, ..., 16ₘ) à des fins de communication ;
**caractérisé en ce que** le procédé comprend les étapes suivantes :
- détermination (S₁) du nombre de nœuds (15₁, ..., 15ₙ) présents ;
- désignation (S₂) d'un des n nœuds (15₁, ..., 15ₙ) déterminés comme nœud maître et des autres nœuds comme nœuds esclaves ;
- sélection (S₃) d'un nœud esclave comme nœud esclave test et empêchement d'une communication des autres nœuds esclaves ;
- test (S₄) visant à établir par lesquels des m ports (16₁, ..., 16ₘ) du nœud maître et par lesquels des m ports (16₁, ..., 16ₘ) du nœud esclave test une communication est possible entre le nœud maître et le nœud esclave test, et enregistrement de ces ports (16₁, ..., 16ₘ) ;
- répétition (S₅) de l'étape de sélection (S₃) et de test (S₄) pour chacun des autres nœuds esclaves, étant entendu que, à l'étape de sélection (S₃), un autre nœud esclave est à chaque fois sélectionné comme nœud esclave test ;
- réalisation (S₆) d'une topologie de connexion relative au nœud maître.

2. Procédé selon la revendication 1, **caractérisé par** l'étape suivante :
- exécution répétée (S₇) des étapes :
a) désignation (S₂) ;
b) sélection (S₃) ;
c) test (S₄) ;
d) répétition (S₅) ; et
e) réalisation (S₆) ;
étant entendu que, à l'étape de désignation (S₂), l'un des nœuds esclaves jusqu'alors présents est désigné comme nouveau nœud maître et que l'étape d'exécution répétée (S₇) est exécutée autant de fois que nécessaire pour qu'au moins n-1 nœuds (15₁, ..., 15ₙ) aient été désignés comme nœuds maîtres.

3. Procédé selon la revendication 2, **caractérisé en ce qu'**au moins un des n nœuds (15₁, ..., 15ₙ), dispose encore, outre des m ports (16₁, ..., 16ₘ), d'au moins une interface supplémentaire filaire ou sans fil et est conçu pour communiquer avec d'autres réseaux ou appareils grâce à cette ou ces interfaces supplémentaires, l'étape suivante étant exécutée :
- ajout de l'au moins une interface supplémentaire à la topologie de connexion relative à l'au moins un des n nœuds (15₁, ..., 15ₙ).

4. Procédé selon la revendication 2 ou 3, **caractérisé par** l'étape suivante :
- création d'une topologie (S₈) du site de communication mobile (1) au moyen des topologies de connexion des divers nœuds (15₁, ..., 15ₙ) créées aux étapes de réalisation (S₆), ladite topologie du site de communication mobile (1) indiquant avec quel autre nœud (15₁, ..., 15ₙ) ou quels autres nœuds (15₁, ..., 15ₙ) est lié chaque nœud (15₁, ..., 15ₙ), notamment à des fins d'échange de données.

5. Procédé selon la revendication 4, **caractérisé par** l'étape suivante :
- à l'étape de création d'une topologie (S₈), les topologies de connexion des divers nœuds (15₁, ..., 15ₙ) sont transmises à un nœud (15₁, ..., 15ₙ) ou à un dispositif de commande, le nœud (15₁, ..., 15ₙ) ou le dispositif de commande créant la topologie du site de communication mobile (1) à partir des diverses topologies de connexion.

6. Procédé selon la revendication 4 ou 5, **caractérisé par** les étapes suivantes :
- comparaison (S₉) de la topologie créée à une topologie de référence ;
- détermination et/ou communication (S₁₀) de divergences entre la topologie créée et la topologie de référence.

7. Procédé selon la revendication 5 ou 6, **caractérisé en ce que** le site de communication mobile (1) présente encore un dispositif de communication conçu pour transmettre des données à destination d'un dispositif de commande et de guidage prioritaire, les étapes suivantes étant exécutées :
- transmission (S₁₁) de la topologie du site de communication mobile (1) créée, auprès du dispositif de commande et de guidage prioritaire, et/ou
transmission (S₁1) des divergences déterminées entre la topologie créée et la topologie de référence, auprès du dispositif de commande et de guidage prioritaire.

8. Procédé selon l'une des revendications précédentes, **caractérisé par** les étapes suivantes :
- à l'étape de détermination (S₁), il est attribué à chaque nœud (15₁, ..., 15ₙ) déterminé un rang individuel ;
- à l'étape de désignation (S₂), le nœud dont le rang présente la valeur la plus faible ou la plus élevée, par rapport aux rangs des autres nœuds (15₁, ..., 15ₙ), est désigné comme nœud maître (15₁, ..., 15ₙ).

9. Procédé selon la revendication 8 et la revendication 2, **caractérisé par** l'étape suivante :
- à l'étape d'exécution répétée (S₇), les rangs préalablement attribués sont conservés lors de l'exécution de l'étape de désignation (S₂) ou bien des rangs totalement ou partiellement nouveaux sont attribués aux nœuds esclaves jusqu'alors présents.

10. Procédé selon l'une des revendications précédentes, **caractérisé en ce que,** à l'étape de sélection (S₃), l'empêchement de la communication des autres nœuds esclaves n'a lieu que pour une durée prédéterminée ou jusqu'à ce qu'il se produire un signal déclencheur.

11. Procédé selon l'une des revendications précédentes, **caractérisé par** les particularités suivantes :
l'étape de test (S₄) comprend les étapes suivantes :
- détection (S₄ₐ) du fait ou non qu'une liaison de communication vers le nœud esclave test peut être établie par le biais d'une communication exclusive mettant en œuvre un seul des m ports (16₁, ..., 16ₘ) du nœud maître, et enregistrement dudit port (16₁, ..., 16ₘ) de ce nœud maître, si la liaison de communication peut être établie ;
- répétition (S_{4b}) de l'étape de détection (S₄ₐ) jusqu'à ce qu'il ait été tenté d'établir une liaison de communication vers le nœud esclave test pour tous les m ports (16₁, ..., 16ₘ) du nœud maître.

12. Procédé selon la revendication 11, **caractérisé par** les particularités suivantes :
l'étape de détection (S₄ₐ) comprend en outre les étapes suivantes :
- empêchement (S_{4a_1}) d'une communication au niveau de tous les ports (16₁, ..., 16ₘ), sauf un, du nœud esclave test et enregistrement du port (16₁, ..., 16ₘ) du nœud esclave test au cas où une liaison de communication vers le nœud maître peut être établie grâce à ce port (16₁, ..., 16ₘ) ;
- répétition (S_{4a_2}) de l'étape d'empêchement (S_{4a_1}) jusqu'à ce qu'il ait été tenté d'établir une liaison de communication vers le nœud maître pour tous les m-1 autres ports (16₁, ..., 16ₘ) du nœud esclave test.

13. Procédé selon la revendication 11, **caractérisé par** les étapes suivantes :
- désignation (S_{4c}) d'un port (16₁, ..., 16ₘ) au niveau du nœud maître pour la communication avec le nœud esclave test et empêchement de la communication sur les autres ports (16₁, ..., 16ₘ) du nœud maître ;
- empêchement (S_{4d}) d'une communication au niveau de tous les ports (16₁, ..., 16ₘ), sauf un, du nœud esclave test et enregistrement de ce port (16₁, ..., 16ₘ) du nœud esclave test au cas où une liaison de communication vers le nœud maître peut être établie grâce à celui-ci ;
- répétition (S₄ₑ) de l'étape d'empêchement (S_{4d}) jusqu'à ce qu'il ait été tenté d'établir une liaison de communication vers le nœud maître pour tous les m-1 autres ports (16₁, ..., 16ₘ) du nœud esclave test.

14. Procédé selon la revendication 13, **caractérisé par** l'étape suivante :
- réexécution (S_{4f}) des étapes de désignation (S_{4c}), d'empêchement (S_{4d}) et de répétition de l'étape d'empêchement (S₄ₑ) pour tous les autres ports (16₁, ..., 16ₘ) du nœud maître pour celui ou ceux des ports pour lesquels, à l'étape de détection (S₄ₐ), il a pu être déterminé qu'une liaison de communication vers le nœud esclave test pouvait être établie.

15. Site de communication mobile (1) comportant n nœuds (15₁, ..., 15ₙ), où n ≥ 3 ou n ≥ 4, chaque nœud (15₁, ..., 15ₙ) comprenant m ports (16₁, ..., 16ₘ), où m ≥ 1, ledit site de communication mobile (1) étant conçu pour mettre en œuvre le procédé de détermination de topologie selon l'une des revendications 1 à 14.
